# FASCICULE DE BREVET EUROPEEN

(11) **EP 1 195 858 B1**
(45) Date de publication et mention de la délivrance du brevet: **28.06.2006**
(21) Numéro de dépôt: 01402485.5
(22) Date de dépôt: 27.09.2001
(51) Int. Cl.: H01R 24/06

(54) **Appareillage pour goulotte à dispositif serre-câble**
Führungskanal-Einrichtung mit Kabelbefestigung
Device for duct with cable fastening means

(30) Priorité: 05.10.2000 FR 0012738
(43) Date de publication de la demande: 10.04.2002
(73) Titulaire: LEGRAND, 87000 Limoges (FR); LEGRAND SNC, 87000 Limoges (FR)
(72) Inventeur: Guillon, Xavier, 72000 Le Mans (FR)
(74) Mandataire: Santarelli

(56) Documents cités:
- DE-A- 3 909 236
- GB-A- 191 513
- US-A- 6 086 390

## Description

La présente invention concerne un appareillage à rapporter directement ou indirectement sur le socle d'une goulotte du type de celle mise en oeuvre pour le support, le logement et la protection de divers appareillages, notamment des appareillages électriques, aussi bien que pour le support, le logement et la protection des conducteurs ou câbles électriques nécessaires à la desserte de ces appareillages électriques.

On entend ici par appareillage, un appareillage électrique comprenant un corps formant un boîtier logeant des contacts métalliques à raccorder à des conducteurs électriques, tel qu'une prise de courant, un interrupteur ou encore un porte-fusible, mais aussi un support d'appareillage électrique comprenant un corps formant support pour un boîtier logeant des contacts métalliques à raccorder à des conducteurs électriques, ledit corps étant rapporté directement sur le socle d'une goulotte.

L'invention trouve une application particulièrement avantageusement pour la réalisation d'un appareillage électrique destiné à faire légèrement saillie ou à être disposé en complète saillie par rapport au couvercle de fermeture du socle de la goulotte.

Habituellement, ce type d'appareillage électrique, en légère saillie ou en complète saillie par rapport au couvercle de la goulotte, est utilisé sans dispositif serre-câble, ce qui peut se révéler dangereux si un installateur tire sur l'extrémité libre d'un câble raccordé à un tel appareillage, lors d'une intervention dans la goulotte, et en particulier pour raccorder cette extrémité à un autre appareillage complémentaire.

En effet, sans dispositif serre-câble, une traction accidentelle sur le câble raccordé électriquement à un appareillage électrique peut provoquer une rupture de connexion avec les contacts métalliques de ce dernier.

Afin de résoudre le problème technique précité, la présente invention propose un nouvel appareillage à rapporter sur le socle d'une goulotte, comprenant un corps, caractérisé en ce qu'il comprend un dispositif serre-câble rattaché audit corps par l'intermédiaire d'une liaison autorisant un décalage en hauteur dudit dispositif serre-câble par rapport à une position d'origine.

Ainsi, avantageusement, l'appareillage selon l'invention comprend un dispositif serre-câble dont la position peut être adaptée en fonction de la position en saillie dudit appareillage par rapport au couvercle de fermeture de la goulotte.

En particulier, lorsque l'appareillage selon l'invention est en légère saillie ou en complète saillie par rapport au couvercle de la goulotte, le dispositif serre-câble peut, par l'intermédiaire de sa liaison au corps, s'orienter de lui-même vers le volume intérieur de la goulotte, sans perdre de sa résistance mécanique, notamment à la traction dans l'axe du câble qu'il maintient.

D'autres caractéristiques non limitatives et avantageuses de l'appareillage selon l'invention sont les suivantes :
- il comprend un moyen de rappel élastique du dispositif serre-câble dans sa position d'origine stable ;
- la liaison entre ledit corps et le dispositif serre-câble est une liaison souple ;
- ladite liaison souple vient de formation avec ledit corps ;
- ladite liaison comprend une console en U dont l'extrémité de chacune de ses branches est reliée audit corps par une paroi mince formant charnière.
- ladite console en U comporte, dans sa partie centrale reliant ses deux branches, au moins un plot pour le montage du dispositif serre-câble ;
- le dispositif serre-câble et ladite liaison au corps sont solidarisés l'un à l'autre par encliquetage ;
- le dispositif serre-câble et ladite liaison au corps sont solidarisés l'un à l'autre par l'intermédiaire d'un système de glissières et de crans ;
- le dispositif serre-câble et ladite liaison au corps sont solidarisés l'un à l'autre par vissage ;
- une embase du dispositif serre-câble, ladite liaison et le corps forment une seule pièce issue de moulage d'une matière plastique ;
- ledit corps forme un boîtier logeant des contacts métalliques à raccorder à des conducteurs électriques ; et
- ledit corps forme support d'un boîtier logeant des contacts métalliques à raccorder à des conducteurs électriques.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective de trois quarts d'un appareillage électrique selon l'invention monté par l'intermédiaire d'un support d'appareillage dans une goulotte ;
- la figure 2 est une vue en perspective de dessus de l'appareillage électrique de la figure 1;
- la figure 3 est une vue en coupe longitudinale de l'appareillage électrique de la figure 1, et
- la figure 4 est une vue schématique de côté de l'appareillage électrique de la figure 2 avec deux positions différentes du dispositif serre-câble.

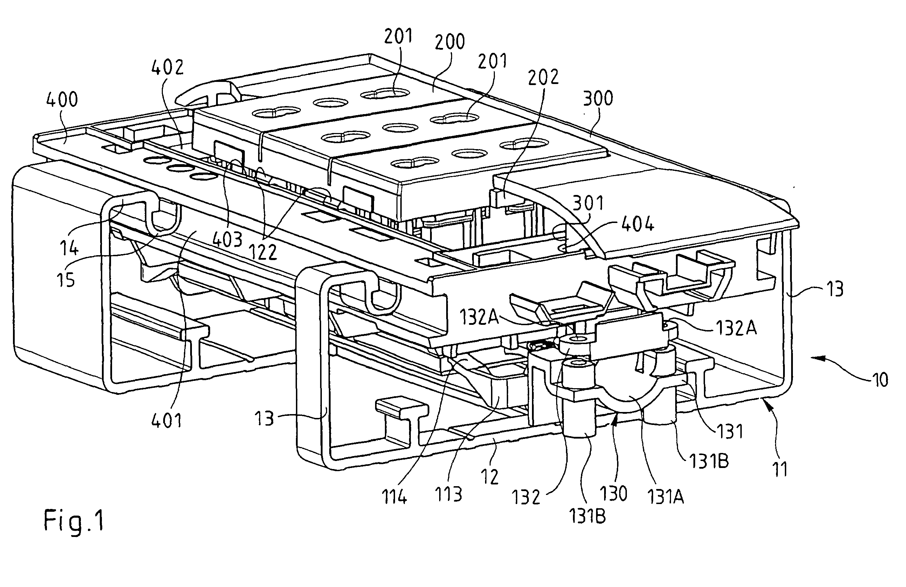

Sur les figures 1 à 4, on a représenté un appareillage électrique 1 à rapporter sur le socle 11 d'une goulotte 10.

Ici, le socle 11 de la goulotte 10 présente, de manière connue en soi, une section en U avec un fond 12 et deux ailes latérales 13 en regard qui comportent chacune un retour transversal 14 formant une gorge longitudinale 15 pour le montage d'un support d'appareillage électrique 400, ou le montage direct d'un appareillage.

Ici, l'appareillage électrique 1 est rapporté sur le socle 11 de la goulotte 10 par l'intermédiaire du support d'appareillage électrique 400 qui est monté sur les gorges longitudinales 15 du socle 11 de la goulotte 10.

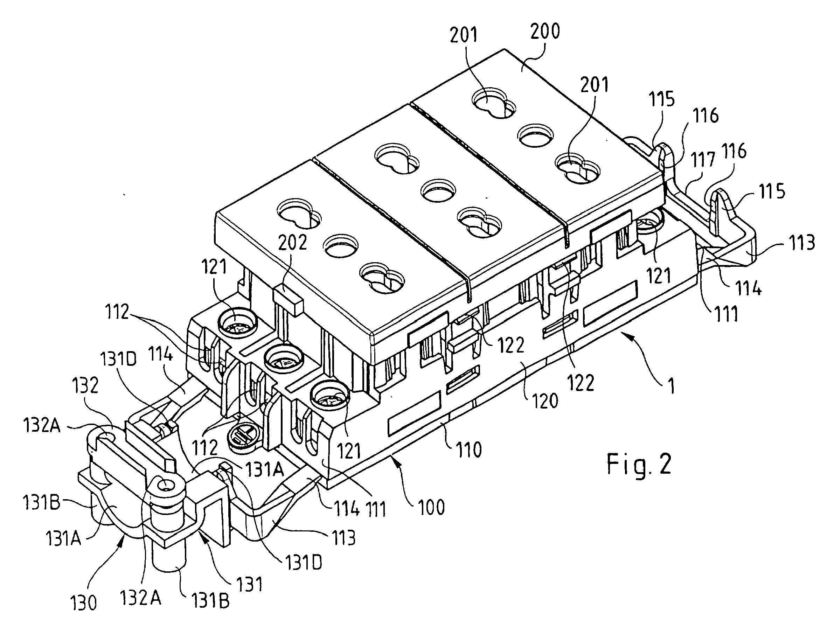

L'appareillage électrique 1, représenté sur les figures 1 à 4, est ici une prise de courant modulaire, c'est-à-dire comprenant plusieurs modules identiques, ici trois modules de prise de courant (voir figure 2).

Bien entendu, il pourrait s'agir d'autres types d'appareillage électrique, tels qu'un interrupteur, ou une prise simple de courant faible ou fort, ou encore un porte-fusible.

L'appareillage électrique 1 comprend un corps 100 qui forme un boîtier logeant des contacts métalliques 140 à raccorder à des conducteurs électriques (non représentés).

De manière connue en soi, le corps 100 est réalisé en plusieurs parties assemblées, constituées d'une matière isolante, ici d'une matière plastique moulée.

Il comprend, plus particulièrement, un fond 110 sur lequel est fixée par encliquetage une partie massive centrale 120 destinée à être montée sur le support d'appareillage électrique 400, logeant les contacts métalliques 140 et recevant en partie supérieure un couvercle enjoliveur 200.

La partie massive centrale 120 du corps 100 de l'appareillage électrique 1 est montée dans le support d'appareillage électrique 400 par l'intermédiaire de dents d'encliquetage 122 situées sur ses faces latérales longitudinales.

A ce sujet, le support d'appareillage électrique 400 est constitué par une plaque pourvue, sur ses côtés longitudinaux, de glissières 401 recevant les gorges longitudinales 15 formées à l'extrémité des retours transversaux 14 des ailes latérales 13 du socle 11 de la goulotte 10, et comprenant une ouverture centrale 402, de forme ici rectangulaire, adaptée à la forme générale de l'appareillage électrique 1 à recevoir.

Le bord de l'ouverture centrale 402 du support d'appareillage 400 comporte ici, sur ses parties longitudinales, un muret 403 destiné à coopérer avec les dents d'encliquetage 122 prévues sur la partie massive centrale 120 du corps 100 de l'appareillage électrique 1.

La longueur de l'ouverture centrale 402 est supérieure à la longueur de l'appareillage électrique 1, pour faciliter le montage de ce dernier sur le support d'appareillage électrique 400.

Bien entendu, on pourrait prévoir un autre type de support d'appareillage électrique, constitué par exemple par deux traverses positionnées de part et d'autre de l'appareillage et s'étendant d'une aile latérale à l'autre de la goulotte, l'appareillage étant fixé, par ses faces d'extrémité, sur ses traverses support.

La partie massive centrale 120 du corps 100 de l'appareillage électrique 1 comprend, sur ses faces d'extrémité 111 opposées, des ouvertures 112 pour l'entrée des conducteurs électriques dans ledit corps 100.

Les contacts métalliques 140 sont rapportés, par exemple par sertissage, sur une plaque support 123 insérée entre le fond 110 et la partie massive centrale 120 du corps 100.

La partie support 123 porte, à au moins une extrémité, un ensemble de bornes pour la connexion des câbles ou des conducteurs électriques d'alimentation. L'accès aux vis 124 de ces bornes est rendu possible grâce à des ouvertures correspondantes 121 de la partie massive centrale 120.

Les contacts métalliques 140 sont positionnés dans des logements verticaux de la partie massive centrale 120 du corps 100. Ici, pour chaque module de prise de courant, trois logements sont alignés, selon un axe transversal à l'axe de la goulotte, pour le raccordement des deux pôles et de la terre.

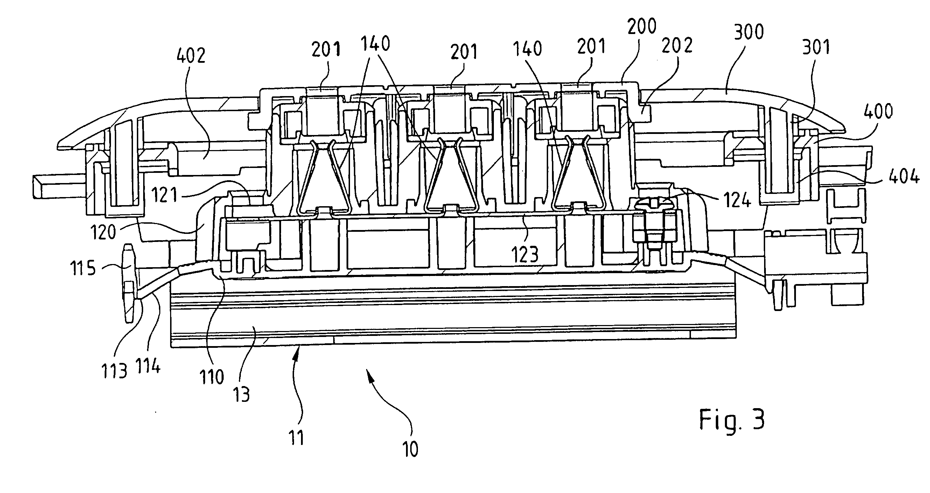

La partie massive centrale 120 étant une pièce unique pour les trois modules de prise de courant, elle comporte alors neuf logements verticaux pour des contacts disposés trois par trois en parallèle, comme cela apparaît plus particulièrement sur les figures 2 et 3.

Bien entendu, les logements logeant les contacts métalliques 140 débouchent par des ouvertures vers l'extérieur, en partie supérieure de la partie massive centrale 120 du corps 100 de l'appareillage électrique 1.

Le couvercle enjoliveur 200 recouvrant le corps 100, et plus particulièrement la partie massive centrale 120 de l'appareillage électrique 1, comprend des ouvertures correspondantes 201 venant en regard des ouvertures desdits logements logeant les contacts métalliques, pour le raccordement de fiches d'une prise de courant mâle (non représentée).

En outre, comme le montre plus particulièrement la figure 1, une fois monté dans le support d'appareillage électrique 400, l'appareillage électrique 1 est recouvert d'une plaque enjoliveur 300 dont une partie repose sur des tétons 202 disposés en saillie sur les faces d'extrémité du couvercle enjoliveur 200, et comprenant une tour de fixation 301 s'engageant dans des puits de réception 404 du support d'appareillage électrique 400.

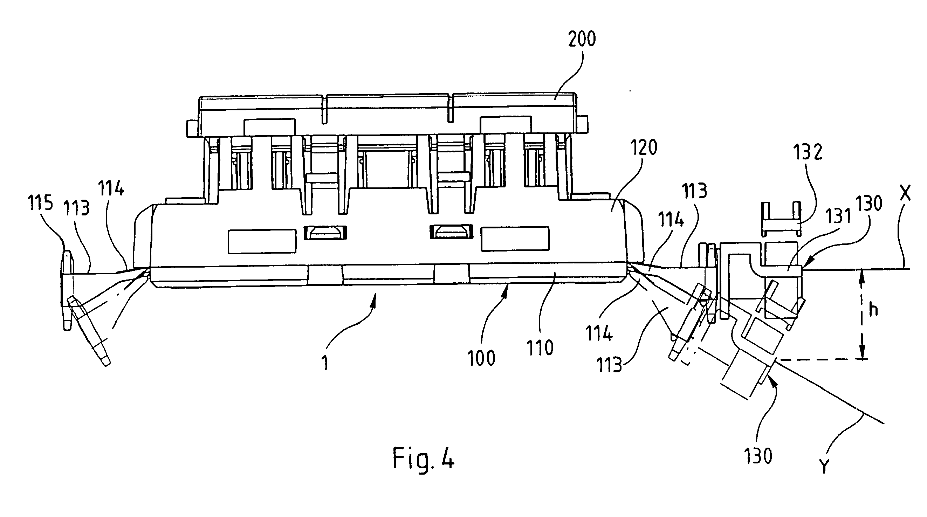

Avantageusement, selon l'invention, l'appareillage électrique 1 comprend un dispositif serre-câble 130 rattaché au corps 100 par l'intermédiaire d'une liaison 113, 114 autorisant un décalage en hauteur h du dispositif serre-câble 130 par rapport à une position d'origine (voir plus particulièrement la figure 4).

Ici, la liaison 113, 114 entre le corps 100 et le dispositif serre-câble 130 est une liaison souple formant un moyen de rappel élastique du dispositif serre-câble 130 dans sa position d'origine stable représentée en trait plein sur la figure 4.

Cette position d'origine stable du dispositif serre-câble 130 est telle qu'il est globalement dans l'alignement du fond 110 du corps 100, selon l'axe X représenté sur la figure 4.

Ici, la liaison souple vient de formation avec ledit corps 100 et plus particulièrement avec le fond 110 du corps 100.

Selon l'exemple représenté, le corps 100 de l'appareillage électrique 1 comprend, à chacune de ses extrémités, une liaison souple en vue d'un montage d'un dispositif serre-câble 130.

Sur les figures, un seul dispositif serre-câble 130 est solidarisé à une liaison souple 113, 114, mais on pourrait prévoir que l'appareillage électrique 1 comporte deux dispositifs serre-câble, chaque dispositif serre-câble étant solidarisé à une liaison souple 113, 114 positionnée à une extrémité du corps 100.

Selon l'exemple de réalisation représenté, chaque liaison souple comprend une console en U 113 comportant une partie centrale et deux branches parallèles 114 reliées audit corps 100, et plus particulièrement au fond 110 dudit corps 100, par une paroi mince formant charnière.

La partie centrale de la console en U 113 comprend deux plots 115 à distance l'un de l'autre et s'élevant verticalement par rapport au plan de la console, pour le montage du dispositif serre-câble 130.

Entre les deux plots 115, il est défini une ouverture en U 117 apte à recevoir une partie du dispositif serre-câble 130.

Le dispositif serre-câble 130 comprend ici une embase 131 solidarisée à la liaison souple, et plus particulièrement à la console en forme de U 113, et une barrette de serrage 132. Les câbles nécessaires à la desserte électrique de l'appareillage électrique 1 sont pris en sandwich entre l'embase 131 et la barrette de serrage 132 serrée sur cette embase 131.

L'embase 131 comporte un berceau de réception 131A des câbles qui présente une forme incurvée vers le haut, c'est-à-dire vers l'opposé du fond 12 du socle 11 de la goulotte 10, ce berceau de réception 131A étant en partie positionné dans l'ouverture 117 prévue entre les deux plots 115 de la console en forme de U 113.

De part et d'autre du berceau de réception 131A, l'embase 131 comprend, à l'extérieur de la console en forme de U 113, des puits taraudés 131B aptes à recevoir des vis de fixation de la barrette de serrage 132 sur l'embase 131. Cette barrette de serrage 132 comporte des ouvertures 132A correspondantes pour le montage des vis de fixation. Par vissage des vis de fixation dans les puits taraudés 131B de l'embase 131, on peut serrer la barrette de serrage 132 sur l'embase 131, et coincer les câbles d'alimentation électriques à raccorder à l'appareillage électrique 1.

L'embase 131 comporte, en outre, de part et d'autre du berceau de réception 131A, des glissières 131D destinées à coopérer avec des crans 116 prévus sur la face intérieure des plots 115 de la console en forme de U 113, c'est-à-dire sur la face tournée vers le corps 100 de l'appareillage électrique 1, pour la solidarisation du dispositif serre-câble 130 à la console en forme de U 113.

Bien entendu, selon une autre variante non représentée, on peut prévoir que l'embase 131, la liaison 113, 114 et le fond 110 du corps 100 forment une seule pièce issue de moulage d'une matière plastique.

On peut également prévoir que la solidarisation du dispositif serre-câble 130 et de la liaison 113, 114 au corps 100 de l'appareillage électrique 1 soit réalisée par encliquetage ou encore par vissage.

Les deux parties du dispositif serre-câble, c'est-à-dire l'embase 131 et la barrette de serrage 132, sont réalisées par moulage de matière plastique.

Ainsi, comme le montre plus particulièrement la figure 4, grâce à la liaison prévue entre le dispositif serre-câble 130 et le corps 100 de l'appareillage électrique 1, le dispositif serre-câble 130 peut prendre une position décalée en hauteur selon un décalage h par rapport à une position d'origine stable dans laquelle il s'étend globalement selon l'axe X.

Dans cette position décalée en hauteur, le dispositif serre-câble 130 est orienté vers le volume intérieur de la goulotte, selon l'axe Y oblique par rapport à l'axe X de la position stable d'origine.

Cette position décalée est obtenue par le fléchissement de la charnière formant liaison entre les branches 114 de la console en forme de U 113 et le fond 110 du corps 100 de l'appareillage électrique 1.

En particulier, l'appareillage électrique 1 étant en légère saillie par rapport au couvercle de la goulotte, comme le montre plus particulièrement la figure 1, ou en complète saillie lorsque le couvercle de la goulotte se situe au niveau de l'axe X (voir figure 4), le dispositif serre-câble peut, par l'intermédiaire de sa liaison au corps, s'orienter de lui-même vers le volume intérieur de la goulotte, comme cela est représenté plus particulièrement sur la figure 4, en s'orientant selon l'axe Y, sans perdre de sa résistance mécanique, notamment à la traction dans l'axe du ou des câble(s) qu'il maintient.

Le décalage en hauteur du dispositif serre-câble 130 est absorbé par la liaison souple, ici la liaison formant charnière, prévue entre la console en forme de U 113 et le corps 100 de l'appareillage électrique 1.

Lorsque l'effet de traction sur le dispositif serre-câble 130 n'existe plus, la liaison souple, formant moyens de rappel élastique, rappelle le dispositif serre-câble 130 dans sa position d'origine orientée selon l'axe X, comme le montre la figure 4.

Bien entendu, la présente invention n'est nullement limitée au mode de réalisation décrit et représenté, mais l'homme du métier saura y apporter toute variante conforme à son esprit.

En particulier, on pourra prévoir que le dispositif serre-câble est lié, comme décrit précédemment, au corps d'un support d'appareillage électrique du type de celui représenté sur les figures.

On peut également prévoir que la liaison, entre le dispositif serre-câble et le corps de l'appareillage, soit une liaison non souple du type à crémaillère ou autre.

## Revendications

1. Appareillage électrique (1) à rapporter sur le socle (11) d'une goulotte (10), comprenant un corps (100), **caractérisé en ce qu'**il comprend un dispositif serre-câble (130) rattaché audit corps par l'intermédiaire d'une liaison (113, 114) autorisant un décalage en hauteur (h) dudit dispositif serre-câble (130) par rapport à une position d'origine.

2. Appareillage électrique (1) selon la revendication 1, **caractérisé en ce qu'**il comprend un moyen de rappel élastique du dispositif serre-câble (130) dans sa position d'origine stable.

3. Appareillage électrique (1) selon l'une des revendications 1 ou 2, **caractérisé en ce que** la liaison (113, 114), entre ledit corps (100) et le dispositif serre-câble (130), est une liaison souple.

4. Appareillage électrique (1) selon la revendication 3, **caractérisé en ce que** ladite liaison souple vient de formation avec ledit corps (100).

5. Appareillage électrique (1) selon l'une des revendications 3 ou 4, **caractérisé en ce que** ladite liaison comprend une console en U (113) dont l'extrémité de chacune de ses branches (114) est reliée audit corps (100) par une paroi mince formant charnière.

6. Appareillage électrique (1) selon la revendication 5, **caractérisé en ce que** ladite console en U (113) comporte, dans sa partie centrale reliant ses deux branches (114), au moins un plot (115) pour le montage du dispositif serre-câble (130).

7. Appareillages électrique (1) selon l'une quelconque des revendications précédentes, **caractérisé en ce que** le dispositif serre-câble (130) et ladite liaison (113, 114) au corps (100) sont solidarisés l'un à l'autre par encliquetage.

8. Appareillage électrique (1) selon l'une quelconque des revendications 1 à 6, **caractérisé en ce que** le dispositif serre-câble (130) et ladite liaison (113, 114) au corps (100) sont solidarisés l'un à l'autre par l'intermédiaire d'un système de glissières et de crans.

9. Appareillage électrique (1) selon l'une quelconque des revendications 1 à 6, **caractérisé en ce que** le dispositif serre-câble (130) et ladite liaison (113, 114) au corps (100) sont solidarisés l'un à l'autre par vissage.

10. Appareillage électrique (1) selon l'une quelconque des revendications 1 à 6, **caractérisé en ce qu'**une embase (131) du dispositif serre-câble (130), ladite liaison (113, 114) et le corps (100) forment une seule pièce issue de moulage d'une matière plastique.

11. Appareillage électrique (1) selon l'une quelconque des revendications précédentes, **caractérisé en ce que** ledit corps (100) forme un boîtier logeant des contacts métalliques (140) à raccorder à des conducteurs électriques.

12. Appareillage électrique (1) selon l'une des revendications 1 à 10, **caractérisé en ce que** ledit corps forme support d'un boîtier logeant des contacts métalliques (140) à raccorder à des conducteurs électriques.

## Claims

1. An electrical apparatus (1) to be fitted to the base (11) of a duct (10) comprising a body (100) **characterised in that** it comprises a cable grip device (130) attached to the body by way of a connection (113, 114) permitting an offset in respect of height (h) of said cable grip device (130) with respect to an original position.

2. An electrical apparatus (1) according to claim 1 **characterised in that** it comprises a resilient return means for returning the cable grip device (130) to its stable original position.

3. An electrical apparatus (1) according to one of claims 1 and 2 **characterised in that** the connection (113, 114) between said body (100) and the cable grip device (130) is a flexible connection.

4. An electrical apparatus (1) according to claim 3 **characterised in that** said flexible connection is formed with said body (100).

5. An electrical apparatus (1) according to one of claims 3 and 4 **characterised in that** said connection comprises a U-shaped bracket (113) of which the end of each of its limbs (114) is connected to said body (100) by a thin wall forming a hinge.

6. An electrical apparatus (1) according to claim 5 **characterised in that**, in its central part connecting its two limbs (114), said U-shaped bracket (113) comprises at least one stud (115) for mounting the cable grip device (130).

7. An electrical apparatus (1) according to any one of the preceding claims **characterised in that** the cable grip device (130) and said connection (113, 114) to the body (100) are fixed to each other by latching engagement.

8. An electrical apparatus (1) according to any one of claims 1 to 6 **characterised in that** the cable grip device (130) and said connection (113, 114) to the body (100) are fixed to each other by way of a system of slides and notches.

9. An electrical apparatus (1) according to any one of claims 1 to 6 **characterised in that** the cable grip device (130) and said connection (113, 114) to the body (100) are fixed to each other by screwing engagement.

10. An electrical apparatus (1) according to any one of claims 1 to 6 **characterised in that** a base portion (131) of the cable grip device (130), said connection (113, 114) and the body (100) form a single piece moulded from a plastic material.

11. An electrical apparatus (1) according to any one of the preceding claims **characterised in that** said body (100) forms a casing accommodating metal contacts (140) to be connected to electrical conductors.

12. An electrical apparatus (1) according to one of claims 1 to 10 **characterised in that** said body forms a support for a casing accommodating metal contacts (140) to be connected to electrical conductors.

## Patentansprüche

1. Elektrisches Gerät (1), das an dem Sockel (11) eines Kanals (10) anzubringen ist, umfassend einen Körper (100), **dadurch gekennzeichnet, dass** es eine Kabelklemtrzenvorriehtung (130) umfasst, die an dem Körper über eine Verbindung (113, 114) angebracht ist, die eine Flöhenversetzung (h) der Kabelklemmenvorrichtung (130) bezüglich einer Ursprungsstellung zulässt.

2. Elektrisches Gerät (1) nach Anspruch 1, **dadurch gekennzeichnet, dass** es ein Mittel zum elastischen Zurückholen der Kabelklemmenvorrichtung (130) in ihre stabile Ursprungsstellung umfasst.

3. Elektrisches Gerät (1) nach einem der Ansprüche 1 oder 2, **dadurch gekennzeichnet, dass** die Verbindung (113, 114) zwischen dem Körper (100) und der Kabelklemmenvorrichtung (130) eine biegsame Verbindung ist.

4. Elektrisches Gerät (1) nach Anspruch 3, **dadurch gekennzeichnet, dass** die biegsame Verbindung mit dem Körper (100) geformt ist.

5. Elektrisches Gerät (1) nach einem der Ansprüche 3 oder 4, **dadurch gekennzeichnet, dass** die Verbindung eine U-förmige Konsole (113) umfasst, bei der das Ende jedes ihrer Schenkel (114) mit dem Körper (100) über eine ein Scharnier bildende, dünne Wand verbunden ist.

6. Elektrisches Gerät (1) nach Anspruch 5, **dadurch gekennzeichnet, dass** die U-förmige Konsole (113) in ihrem ihre beiden Schenkel (114) verbindenden zentralen Teil mindestens eine Nase (115) für die Montage der Kabelklemmenvorrichtung (130) umfasst.

7. Elektrisches Gerät (1) nach einem der vorhergehenden Ansprüche, **dadurch gekennzeichnet, dass** die Kabelklemmenvorrichtung (130) und die Verbindung (113, 114) mit dem Körper (100) miteinander durch Verklinken fest verbunden sind.

8. Elektrisches Gerät (1) nach einem der Ansprüche 1 bis 6, **dadurch gekennzeichnet, dass** die Kabelklemmenvorrichtung (130) und die Verbindung (113, 114) mit dem Körper (100) miteinander über ein System von Gleitführungen und Zähnen fest verbunden sind sind.

9. Elektrisches Gerät (1) nach einem der Ansprüche 1 bis 6, **dadurch gekennzeichnet, dass** die Kabelklemmenvorrichtung (130) und die Verbindung (113, 114) mit dem Körper (100) miteinander durch Verschraubung fest verbunden sind.

10. Elektrisches Gerät (1) nach einem der Ansnprüche 1 bis 6, **dadurch gekennzeichnet, dass** ein Sockel (131) der Kabelklemmenvorrichtung (130), die Verbindung (113, 114) und der Körper (100) ein einziges Teil bilden, das durch Formung eines Kunststoffs hergestellt ist.

11. Elektrisches Gerät (1) nach einem der vorhergehenden Ansprüche, **dadurch gekennzeichnet, dass** der Körper (100) ein Grehäuse bildet, das Metallkontakte (140) beherbergt, die an elektrische Leiter anzuschließen sind.

12. Elektrisches Gerät (1) nach einem der Ansprüche 1 bis 10, **dadurch gekennzeichnet, dass** der Körper den Träger eines Gehäuses bildet, das Metallkontakte (140) beherbergt, die an elektrische Leiter anzuschließen sind.
